Europäisches Patentamt

European Patent Office

Office européen des brevets

(11) Publication number: **0 109 990**
**B1**

(12) **EUROPEAN PATENT SPECIFICATION**

(45) Date of publication of patent specification: **04.05.88**

(21) Application number: **82306299.7**

(22) Date of filing: **25.11.82**

(51) Int. Cl.⁴: **F 16 G 5/00,** F 16 G 5/20

(54) V-belt structure.

(43) Date of publication of application:
**13.06.84 Bulletin 84/24**

(45) Publication of the grant of the patent:
**04.05.88 Bulletin 88/18**

(84) Designated Contracting States:
**DE FR GB IT**

(56) References cited:
**EP-A-0 060 713**
**FR-A-1 050 821**
**FR-A-2 503 305**
**GB-A- 365 293**
**GB-A-1 178 274**
**US-A-2 263 960**
**US-A-2 792 319**
**US-A-2 822 856**
**US-A-3 625 809**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Takano, Hiroshi**
**No. 2-543, Higashi-Jiyugaoka Shijimi-cho**
**Miki-city Hyogo (JP)**
Inventor: **Shiinoki, Kunikatsu**
**No. 1534-5, Junna Ikawadani**
**Tarumi-Ku Kobe (JP)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

## Description

This invention relates to V-belt structures and in particular to V-belt structures for use in power transmission.

In one conventional form of V-belt structure the V-belt is defined by a body of rubber having a trapezoidal cross-section. A plurality of low elongation, high strength tensile cords are provided in parallel transversely spaced relationship to extend longitudinally through the body intermediate the upper and lower faces of the body. The lower portion of the body defines a compression section and the upper portion of the body defines a tension section.

It is further conventional to provide such V-belts with reinforcing fabric on one or both of the upper and lower faces. Such fabrics may be provided in one or more layers on the respective faces.

In one conventional form of such a V-belt known as a raw edge-type V-belt, the side faces of the V-belt are uncovered.

As the belt body is formed of a flexible rubber material, the belt provides desirable bending strength.

However, when the belt is entrained about a pulley in the drive system, lateral pressure causes the belt to expand laterally against the pulley surfaces tending to increase friction and noise. In an effort to stiffen the belt against this lateral expansion, it has been common to provide in the belt short staple fibers such as Stiflex fibers which are arranged to extend in the transverse direction to provide enhanced lateral stability and resistance to expansion.

However, it has been found that the use of such Stiflex material has not provided sufficient resistance to transverse expansion, particularly where the belt is used in high power transmission systems. Illustratively, such belts have been found to be unsatisfactory for use as power transmission belts in torque converters such as used in motorcycles, farm appliances, etc.

GB—A—1,178,274 discloses a V-belt provided with tensile cords, and with monofilament reinforcing elements. The monofilaments are disposed in one or more layers inwardly and/or outwardly of the tensile cords, with the monofilaments in each layer being interlooped by binding elements. However, these binding elements adversely affect the control of the longitudinal extension of the belt by the tensile cords, and cause the belt to be undesirably rigid.

FR—A—2,503,305 discloses a similar structure to the present invention, in which, however, the reinforcing elements comprise twisted cables.

The present invention seeks to provide a V-belt, with tensile cords, with transverse reinforcing elements which cooperate with the tensile cords to prevent undesirable transverse expansion of the belt adjacent the cords thereby to prevent migration of the tensile cords and hence prolong the useful life of the belt. However, it is desired to overcome the disadvantages of the prior art by providing a structure which does not cause the belt to have an undesirably high rigidity.

According to the present invention, there is provided a V-belt (10, 210, 310, 410, 510, 610, 710 or 810) comprising:

a rubber body (11, 211, 311, 411, 511, 611, 711 or 811) defining outer (12) and inner (13, 213, 313, 413, 513, 713 or 813) faces;

a plurality of substantially parallel, low elongation, high strength tensile cords (14, 314 or 814) extending longitudinally with respect to the V-belt between said faces of the rubber body, closer to said outer face than to said inner face;

a plurality of first filament reinforcing elements (16), each extending substantially fully transversely across the body outwardly of the tensile cords; and

a plurality of second monofilament reinforcing elements (17, 217, 325, 428, 528, 628, 728 or 831), each extending substantially fully transversely across the body inward of the tensile cords, characterised in that:

The outer surface of each reinforcing element (16, 17, 217, 325, 428, 528, 628, 728 or 831) completely engages the surrounding rubber body such that adjacent reinforcing elements are connected solely by the rubber body in order that longitudinal extension of the belt is controlled only by the tensile cords.

The present invention thus comprehends an improved V-belt structure having high resistance to lateral expansion of the V-belt nothwithstanding the use thereof in drive systems having high power transmission characteristics.

In the illustrated embodiments, the reinforcing elements are formed of a synthetic resin.

Where the reinforcing elements comprise monofilaments, they may be formed of a synthetic resin selected from the group comprising polyester resin, polyamide resin, and polycarbonate resin.

Where the reinforcing elements comprise a bundle of fibers, they may be formed of a synthetic resin material selected from the group comprising polyester resin, aliphatic polyamide resin, aromatic polyamide resin, polyvinyl alcohol resin, and polyvinyl acetate resin.

In certain of the embodiments the transverse filament reinforcing elements are disposed adjacent the tensile cords only. In other embodiments additional transverse filament reinforcing elements are disposed adjacent the lower face.

In another embodiment the transverse filament reinforcing elements are disposed intermediate the tensile cords and the upper face and a second group of filament reinforcing elements is disposed adjacent the lower face.

In another embodiment the filament reinforcing elements are distributed randomly. In one such random distribution embodiment the transverse filament reinforcing elements are spaced from the inner face and in another form the transverse filament reinforcing elements are distributed randomly through all portions of the body.

Thus the invention broadly comprehends the provision of a plurality of transverse filament reinforcing elements at least a portion of which are disposed adjacent the tensile cords of the V-belt. Various arrangements of the transverse filament reinforcing elements are comprehended within the scope of the invention.

The V-belt structure embodying the invention is extremely simple and economical of construction which yet providing a highly improved, long trouble-free life notwithstanding the use of the V-belt in high power transmission systems.

Fig. 1 is a fragmentary perspective section of a V-belt embodying the invention;

Fig. 2 is a fragmentary perspective section illustrating another form of V-belt embodying the invention;

Fig. 3 is a fragmentary perspective section illustrating yet another form of V-belt embodying the invention;

Fig. 4 is a fragmentary perspective section illustrating a further form of V-belt embodying the invention;

Fig. 5 is a fragmentary perspective section illustrating still another form of V-belt embodying the invention;

Fig. 6 is a fragmentary perspective section illustrating yet another form of V-belt embodying the invention;

Fig. 7 is a fragmentary perspective section illustrating another form of V-belt embodying the invention; and

Fig. 8 is a fragmentary perspective section illustrating a further form of V-belt embodying the invention.

The invention comprehends the provision in a V-belt generally designated 10 having a rubber body 11 defining an upper surface, or face, 12 and a lower surface, or face, 13, and a plurality of substantially parallel, low elongation, high strength tensile cords 14 extending lengthwise longitudinally of the V-belt intermediate the faces 12 and 13, of improved means for preventing undesirable transverse expansion of the belt in use.

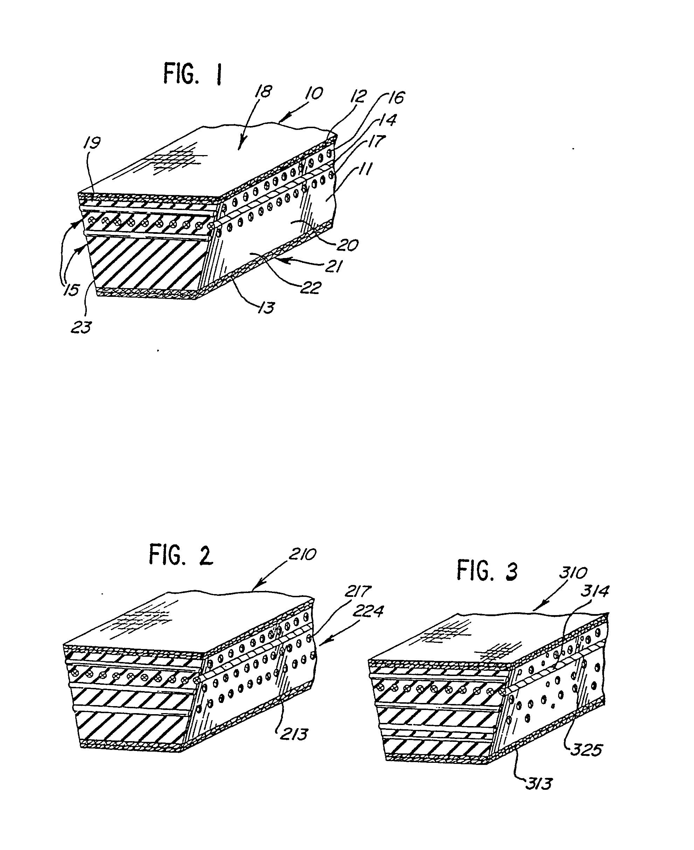

More specifically, the transverse expansion prevention means generally designated 15 includes a first plurality of filament reinforcing elements 16, each extending substantially fully transversely across body 11 outwardly adjacent the tensile cords 14. In the embodiment of Fig. 1, the transverse expansion prevention means 15 further includes a second plurality of filament reinforcing elements 17, each extending substantially fully transversely across the body 11 inwardly adjacent the tensile cords 14.

In the embodiment of Fig. 1, V-belt body 11 is preferably formed of rubber such as natural rubber, styrene-butadiene rubber, chloroprene rubber, or acryl-nitrile butadiene rubber. The rubber may be formed of a blend of one or more such rubbers as desired.

As further shown in Fig. 1, upper surface 12 is provided with reinforcing fabric generally designated 18 which may comprise a bias fabric, or a wide-angle fabric composed of cotton warp and woof threads. The fabric may be provided as a single layer or multiple layers as desired.

Tensile cords 14 illustratively may be formed of suitable synthetic resin fibres such as polyester resin, aliphatic polyamide resin, or aromatic polyamide resin such as that provided under the trademark Kevlar. Alternatively, the tensile cords may be formed of glass fibers. As shown, the tensile cords are embedded in parallel between the upper portion 19 of body 11 conventionally referred to as the tension section, and the lower portion 20 of the body conventionally referred to as the compression section.

As further shown in Fig. 1, lower face 13 may be provided with a reinforcing fabric 21. Illustratively, the fabric 21 may be similar to the upper fabric 18 as discussed above. Alternatively, lower fabric 21 comprises a fabric woven with woolly processed, crimped nylon woof and normal nylon woof threads.

Fabrics 18 and 21 may be secured to the upper face 12 and lower face 13 respectively by suitable adhesive means.

In the embodiment of Fig. 1, the transverse filament reinforcing elements 16 and 17 comprise monofilaments formed of a suitable synthetic resin. Illustratively, the monofilaments may be formed of polyester resin, polyamide resin, polycarbonate resin, etc. In the illustrated embodiment the transverse monofilaments have a cross-sectional diameter in the range of approximately 0.2—2 millimeters.

Illustratively, the monofilaments may be provided with suitable adhesive material on the outer surface thereof prior to the embedment in the rubber body.

The monofilaments may be provided as shown in Fig. 1 in a layered arrangement. The invention comprehends the provision of such filaments in one or more layers as desired.

The invention comprehends that the monofilament 17 may be formed of similar material as monofilament 16 or different material as desired.

The provision of the transverse filament reinforcing elements has been found to prevent migration of the tensile cords from the desired layered arrangement illustrated in Fig. 1 which has occurred in prior art belts due to heating of the belt during operation. By maintaining the tensile cords in the desired disposition extended belt life is provided.

In the embodiment of Fig. 1, lower surface 13 is essentially planar and the side edges 22 and 23 are exposed so as to define a raw edge belt construction.

The transverse filament reinforcing elements 16 may alternatively comprise bundles of smaller diameter filaments. Illustratively, each bundle comprises approximately 1800—2300 filaments having a diameter in the range of approximately 21—30 μm. The small diameter filaments in the illustrated embodiment are preferably formed of a synthetic resin such as polyester resin, aliphatic - polyamide resin, aromatic polyamide resin, polyvinyl alcohol resin, or polyvinyl acetate resin.

The multifilament elements are preferably plied to a twisting coefficient of approximately 0.3—2.5. The individual small filaments are treated with a blend of epoxy resin and isocyonate in a weight blending ratio of approximately 0.5—2.0. The small diameter filaments are immersed in the processing liquid dissolved in toluine solution in approximately 10—25% concentration and are heat treated at a temperature of approximately 170°C to 240°C for approximately 60—120 seconds to produce a high rigidity filament bundle having an outer diameter of approximately 1—2 mm.

To further increase the adhesiveness of the reinforcing elements to the embedding rubber, the bundles are immersed in a resorcinol, formalin, latex liquid mixture followed by treatment with a suitable adhesive such as mucilage in a subsequent drying and hardening step.

The use of such transverse filament bundle reinforcing elements provides a highly improved V-belt structure having high transverse expansion resistance with the reinforcing elements being effectively maintained bonded to the embedding rubber to provide a long, trouble-free life of the V-belt structure.

As illustrated in Fig. 2, the invention comprehends the provision of a V-belt structure generally designated as 210 which is similar to V-belt structure 10 but having a second layer of transverse filament reinforcing elements generally designated 224 intermediate the first layer of elements 217 and the lower face 213 of the belt structure. The transverse filament reinforcing element 224 may comprise monofilaments such as monofilament 17 as illustrated in Fig. 1 or bundled elements as described above, as desired.

Referring to the embodiment of Fig. 3, a modified form of V-belt structure generally designated 310 is shown to comprise a similar V-belt construction but wherein the transverse filament reinforcing elements generally designated 325 are distributed randomly upwardly of and below the tensile cords 314.

The transverse elements 325 may comprise monofilaments similar to monofilament 17 or bundled filament elements as described above as desired.

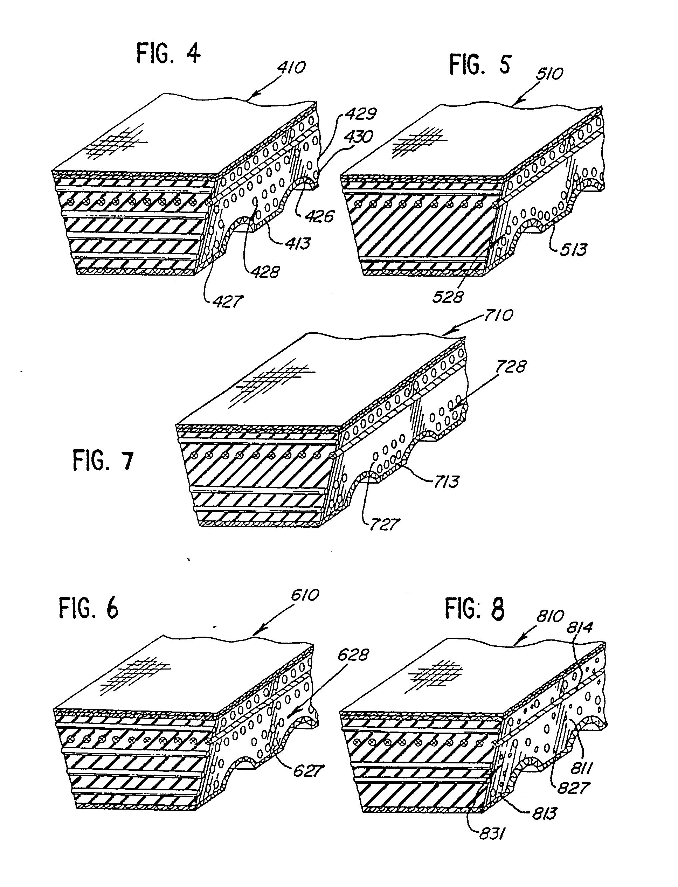

Referring now to the embodiment of Fig. 4, a further modified form of V-belt structure generally designated 410 is shown to comprise a V-belt structure generally similar to V-belt structure 10 but wherein the lower surface 413 is provided with a plurality of longitudinally spaced, transversely extending, downwardly opening grooves 426 cooperatively defining a plurality of cogs 427.

As further illustrated in Fig. 4, a third plurality 428 of transverse filament reinforcing elements is provided in belt structure 410 substantially in the cogs 427 to provide further enhanced transverse stability and resistance to expansion. As shown in Fig. 4, transverse reinforcing elements 428 may be provided in a plurality of layers such as layers 429 and 430.

The transverse reinforcing elements 428 may comprise monofilaments similar to monofilament 17 of V-belt structure 10.

Referring to the embodiment of Fig. 5, still another modified form of V-belt structure generally designated 510 is shown to comprise a cog-type V-belt structure similar to that of V-belt structure 410 of Fig. 4 but wherein the transverse filament reinforcing elements 528 are arranged in a layer generally conforming to the configuration of the lower belt face 513 and closely adjacent thereto. The reinforcing elements 528 may comprise monofilaments or filament bundle elements as discussed above as desired.

Referring to Fig. 6, still another form of V-belt structure generally designated 610 is shown to comprise a V-belt structure generally similar to that of V-belt structure 410 but wherein the filaments 628 disposed in the respective cog portions 627 are formed of filament bundles as described above.

Referring to the embodiment of Fig. 7, still another form of V-belt structure generally designated 710 embodying the invention is shown to comprise a V-belt structure generally designated 710 similar to the V-belt structures 410 and 610 discussed above but wherein no layer of transverse filament reinforcing elements is provided below the tensile cords 714. Thus the transverse filament reinforcing elements generally designated 728 adjacent the lower surface 713 in the cogs 727 may comprise monofilament reinforcing elements or filament bundle elements as discussed above as desired.

Referring now to the embodiment of Fig. 8, still another form of V-belt structure generally designated 810 is shown to comprise a V-belt structure wherein the transverse filament reinforcing elements generally designated 831 are uniformly distributed in the V-belt body 811 both above and below the tensile cords 814 and extending to adjacent the lower face 813. Reinforcing elements 831 may comprise monofilaments or filament bundle elements as discussed above as desired. Further, lower face 813 may comprise a grooved or faced as illustrated in Fig. 8 or a plane lower face such as face 313 illustrated in Fig. 3 as desired. Where the lower face 813 is grooved, the transverse filament reinforcing elements 831 include a portion thereof which may be disposed within the cogs 827 as shown.

Elements or portions of the structures of the V-belt modifications illustrated in Figs. 2—8 which are similar to corresponding elements or portions of V-belt structure 10 are identified by similar reference numerals but 100 different. Except as otherwise noted above, the structure and functioning of the V-belts 110—810 are similar to that of V-belt structure 10 in each of the embodiments improved resistance to migration of the tensile cords through the rubber body as a result of high-powered transmission use of the belt as effectively avoided by the stabilizing and transverse expansion resistance functioning of the transverse filament reinforcing elements. In those embodiments wherein the transverse filament reinforcing elements are further provided within the cogs of the cog belt structures enhanced resistance to transverse expansion of the cogs themselves is provided and thereby further improving the trouble-free lift of the V-belt.

The invention comprehends the use in a given V-belt structure of transverse filament reinforcing elements which are similar throughout the construction or which may differ both as to composition and/or physical arrangement including not only selective use of monofilament and bundled filament elements but also the use of different diameter reinforcing elements in the given belt structure. It is desirable to coordinate the desired transverse expansion resistance characteristics of the filament reinforcing elements utilized with the requirements of the belt at different portions thereof so as to provide optimum long trouble-free life of the belt while concurrently maintaining desired flexibility and bending strength. The invention comprehends that the filaments making up a given bundle may be similar or different as desired. Where the bundle filaments are utilized it is desirable to treat the bundle with liquid adhesive or bonding means so as to cause penetration into the internal crevices of the bundle and cause firm bonding of the filaments thereof to each other. Such internal bonding of the bundles further provides improved bonding to the embedding rubber of the belt body so as to further improve the useful belt life.

As indicated above, the provision of the transverse filament reinforcing elements below the tensile cords effectively prevents migration of the tensile cords toward the lower surface as a result of thermal contraction of the tensile cords such as due to heating of the belt during the driving operation. As a result the desired arrangement of the tensile cords is maintained to provide further improved trouble-free life of the belt.

**Claims**

1. A V-belt comprising a rubber body defining outer and inner faces; a plurality of substantially parallel, low elongation, high strength tensile cords extending longitudinally with respect to the V-belt between said faces of the rubber body, closer to said outer face than to said inner face; a plurality of first filament reinforcing elements, each extending substantially fully transversely across the body outwardly of the tensile cords; and a plurality of second monofilament reinforcing elements, each extending substantially fully transversely across the body inward of the tensile cords, characterised in that the outer surface of each reinforcing element completely engages the surrounding rubber body such that adjacent reinforcing elements are connected solely by the rubber body in order that longitudinal extension of the belt is controlled only by the tensile cords.

2. A V-belt as claimed in claim 1, characterised in that the second reinforcing elements are located adjacent the tensile cords.

3. A V-belt as claimed in claim 1 or claim 2, characterised in that the V-belt further comprises a plurality of third filament reinforcing elements, each extending substantially fully transversely across the body adjacent the inner face of the belt.

4. A V-belt as claimed in claim 1, characterised in that the second reinforcing elements are disposed randomly throughout that portion of the belt body inwards of the tensile cords.

5. A V-belt as claimed in claim 4, characterised in that the second reinforcing elements are spaced from the inner face.

6. A V-belt as claimed in claim 4, characterised in that the second reinforcing elements are distributed throughout the body between the tensile cords and the inner face.

7. A V-belt as claimed in claim 1, characterised in that the inner face is provided with a plurality of parallel, longitudinally spaced, transverse grooves, to form a cog V-belt.

8. A V-belt as claimed in claim 7, characterised in that at least some of the second reinforcing elements are located adjacent the grooves.

9. A V-belt as claimed in claim 7 or 8, characterised in that at least some of the second reinforcing elements are disposed in at least one planar layer.

10. A V-belt as claimed in claim 7, 8 or 9, characterised in that at least some of the second reinforcing elements are arranged in a layer which is a substantially constant distance from the grooved inner face.

11. A V-belt as claimed in claim 7, 8, 9 or 10, characterised in that at least some of the second reinforcing elements are disposed adjacent the tensile cords.

12. A V-belt as claimed in claim 7 or 8, characterised in that the second reinforcing elements are disposed randomly between the tensile cords and the inner face of the belt.

13. A V-belt as claimed in any preceding claim, characterised in that fabric material is adhered to said outer face.

14. A V-belt as claimed in any preceding claim, characterised in that fabric material is adhered to said inner face.

15. A V-belt as claimed in any preceding claim, characterised in that the first reinforcing elements comprise monofilaments.

16. A V-belt as claimed in claim 15, characterised in that the monofilaments are formed of synthetic resins selected from the group comprising polyester resin, polyamide resin, and polycarbonate resin.

17. A V-belt as claimed in any preceding claim, characterised in that each first reinforcing element comprises a bundle of filaments.

18. A V-belt as claimed in claim 17, characterised in that the bundles of filaments are formed of a synthetic resin selected from the group comprising polyester resin, aliphatic polyamide resin, aromatic polyamide resin, polyvinyl alcohol resin, and polyvinyl acetate resin.

## Patentansprüche

1. Keilriemen mit einem Gummikörper, der eine äußere und eine innere Fläche definiert, mit einer Vielzahl von im wesentlichen parallelen, geringdehnenden, hochfesten Zugfäden, die sich in Längsrichtung in bezug auf den Keilriemen zwischen den Flächen des Gummikörpers, und zwar dichter an der äußeren Fläche als an der inneren Fläche, erstrecken, mit einer Vielzahl von ersten Faser-Bewehrungselementen, wovon sich jedes im wesentlichen vollständig quer über den Körper auswärts von den Zugfäden erstreckt, und mit einer Vielzahl von zweiten Einfaser-Bewehrungselementen, wovon sich jedes im wesentlichen vollständig quer über den Körper einwärts von den Zugfäden erstreckt, dadurch gekennzeichnet, daß die äußere Oberfläche jedes der Bewehrungselemente vollständig derart in den umgebenden Gummikörper eingreift, daß benachbarte Bewehrungselemente nur durch den Gummikörper miteinander verbunden sind, um zu erreichen, daß die Längsdehnung des Keilriemens nur durch die Zugfäden beeinflußt wird.

2. Keilriemen nach Anspruch 1, dadurch gekennzeichnet, daß die zweiten Bewehrungselemente angrenzend an die Zugfäden angeordnet sind.

3. Keilriemen nach Anspruch 1 oder 2, dadurch gekennzeichnet, daß der Keilriemen desweiteren eine Vielzahl von dritten Faser-Bewehrungselementen enthält, wovon sich jedes im wesentlichen vollständig quer über den Körper angrenzend an die innere Fläche des Keilriemens erstreckt.

4. Keilriemen nach Anspruch 1, dadurch gekennzeichnet, daß die zweiten Bewehrungselemente willkürlich durch denjenigen Abschnitt des Keilriemens hindurch verlaufend, der einwärts von den Zugfäden liegt, angeordnet sind.

5. Keilriemen nach Anspruch 4, dadurch gekennzeichnet, daß die zweiten Bewehrungselemente einen Abstand von der inneren Fläche aufweisen.

6. Keilriemen nach Anspruch 4, dadurch gekennzeichnet, daß die zweiten Bewehrungselemente durch den Körper hindurch zwischen den Zugfäden und der inneren Fläche verlaufend verteilt sind.

7. Keilriemen nach Anspruch 1, dadurch gekennzeichnet, daß die innere Fläche mit einer Vielzahl von parallelen, in Längsrichtung einen Abstand voneinander aufweisenden, querverlaufenden Vertiefungen versehen ist, um einen Zahn-Keilriemen zu bilden.

8. Keilriemen nach Anspruch 7, dadurch gekennzeichnet, daß zumindest einige der zweiten Bewehrungselemente angrenzend an die Vertiefungen angeordnet sind.

9. Keilriemen nach Anspruch 7, 8 oder 9, dadurch gekennzeichnet, daß zumindest einige der zweiten Bewehrungselemente in zumindest einer planaren Schicht angeordnet sind.

10. Keilriemen nach Anspruch 7 oder 8, dadurch gekennzeichnet, daß zumindest einige der zweiten Bewehrungselemente in einer Schicht angeordnet sind, die einen im wesentlichen konstanten Abstand von der mit Vertiefungen versehenen inneren Fläche aufweist.

11. Keilriemen nach Anspruch 7, 8, 9 oder 10, dadurch gekennzeichnet, daß zumindest einige der zweiten Bewehrungselemente angrenzend an die Zugfäden angeordnet sind.

12. Keilriemen nach Anspruch 7 oder 8, dadurch gekennzeichnet, daß die zweiten Bewehrungselemente willkürlich zwischen den Zugfäden und der inneren Fläche des Keilriemens angeordnet sind.

13. Keilriemen nach einem der vorhergehenden Ansprüche, dadurch gekennzeichnet, daß Gewebematerial auf die äußere Fläche geklebt ist.

14. Keilriemen nach einem der vorhergehenden Ansprüche, dadurch gekennzeichnet, daß Gewebematerial auf die innere Fläche geklebt ist.

15. Keilriemen nach einem der vorhergehenden Ansprüche, dadurch gekennzeichnet, daß die ersten Bewehungselemente Einfachfasern enthalten.

16. Keilriemen nach Anspruch 15, dadurch gekennzeichnet, daß die Einfachfasern aus synthetischen Harzen gebildet sind, die aus der Gruppe ausgewählt sind, welche Polyesterharz, Polyamidharz und Polycarbonatharz enthält.

17. Keilriemen nach einem der vorhergehenden Ansprüche, dadurch gekennzeichnet, daß jedes der ersten Bewehrungselemente ein Bündel von Fasern enthält.

18. Keilriemen nach Anspruch 17, dadurch gekennzeichnet, daß die Bündel von Fasern aus einem synthetischen Harz gebildet sind, das aus der Gruppe ausgewählt ist, die Polyesterharz, aliphatisches Polyamidharz, aromatisches Polyamidharz, Polyvinylalkoholharz und Polyvinylazetatharz enthält.

## Revendications

1. Courroie trapézoïdale comprenant un corps en caoutchouc délimitant des faces externe et interne, plusieurs câblés de traction à hautre résistance et à faible allongement, à peu près parallèles, s'étendant longitudinalement par rapport à la courroie entre lesdites faces du corps en caoutchouc, plus proches de ladite face externe que de ladite face interne, plusieurs premiers éléments de renforcement à filaments s'étendant chacun à peu près entièrement transversalement dans le corps à l'extérieur des câblés de traction, et plusieurs seconds éléments de renforcement monofilaments s'étendant à peu près totalement transversalement dans le corps vers l'intérieur des câblés de traction, caractérisée en ce que la surface externe de chaque élément de renforcement est totalement en contact avec le corps de caoutchouc environnant de façon que les éléments de renforcement adjacents soient reliés seulement par le corps de caoutchouc, afin que l'allongement longitudinal de la courroie soit commandé seulement par les câblés de traction.

2. Courroie trapézoïdale suivant la revendication 1, caractérisée en ce que les seconds éléments de renforcement sont disposés adjacents aux câblés de traction.

3. Courroie trapézoïdale suivant la revendication 1 ou 2, caractérisée en ce qu'elle comprend en outre plusieurs troisièmes éléments de renforcement à filaments, s'étendant chacun à peu près entièrement transversalement au corps au voisinage de la face interne de la courroie.

4. Courroie trapézoïdale suivant la revendication 1, caractérisée en ce que les seconds éléments de renforcement sont disposés de manière aléatoire sur toute la partie du corps de la courroie située vers l'intérieur des câblés de traction.

5. Courroie trapézoïdale suivant la revendication 4, caractérisée en ce que les seconds éléments de renforcement sont espacés de la face interne.

6. Courroie trapézoïdale suivant la revendication 4, caractérisée en ce que les seconds éléments de renforcement sont répartis dans tout le corps entre les câblés de traction et la face interne.

7. Courroie trapézoïdale suivant la revendication 1, caractérisée en ce que la face interne comporte plusieurs gorges transversales parallèles espacées longitudinalement afin de former une courroie dentée.

8. Courroie trapézoïdale suivant la revendication 7, caractérisée en ce qu'au moins certains des seconds éléments de renforcement sont disposés adjacents aux gorges.

9. Courroie trapézoïdale suivant la revendication 7 ou 8, caractérisée en ce qu'au moins certains des seconds éléments de renforcement sont disposés en au moins une couche plane.

10. Courroie trapézoïdale suivant la revendication 7, 8 ou 9, caractérisée en ce qu'au moins certains des seconds éléments de renforcement sont agencés en une couche qui est à une distance à peu près constante de la face interne à gorges.

11. Courroie trapézoïdale suivant la revendication 7, 8, 9 ou 10, caractérisée en ce qu'au moins certains des seconds éléments de renforcement sont disposés adjacents aux câblés de traction.

12. Courroie trapézoïdale suivant la revendication 7 ou 8, caractérisée en ce que les seconds éléments de renforcement sont disposés de manière aléatoire entre les câblés de traction et la face interne de la courroie.

13. Courroie trapézoïdale suivant l'une quelconque des revendications précédentes, caractérisée en ce qu'un tissu est collé à ladite face externe.

14. Courroie trapézoïdale suivant l'une quelconque des revendications précédentes, caractérisée en ce qu'un tissu est collé sur ladite face interne.

15. Courroie trapézoïdale suivant l'une quelconque des revendications précédentes, caractérisée en ce que les premiers éléments de renforcement sont constitués de monofilaments.

16. Courroie trapézoïdale suivant la revendication 15, caractérisée en ce que les monofilaments sont formés de résines synthétiques choisies parmi le groupe comprenant une résine polyester, une résine polyamide et une résine polycarbonate.

17. Courroie trapézoïdale suivant l'une quelconque des revendications précédentes, caractérisée en ce que chaque premier élément de renforcement est constitué d'un faisceau de filaments.

18. Courroie trapézoïdale suivant la revendication 17, caractérisée en ce que les faisceau de filaments sont formés d'une résine synthétique choisie parmi le groupe comprenant une résine polyester, une résine polyamide aliphatique, une résine polyamide aromatique, une résine d'alcool polyvinylique et une résine d'acétate de polyvinyle.

FIG. 1

FIG. 2

FIG. 3

FIG. 4

410

429
430

426

413

428

427

FIG. 5

510

513

528

FIG. 7

710

728

713

727

FIG. 6

610

628

627

FIG: 8

810
814

811
827

813

831